(19) Europäisches Patentamt

European Patent Office

Office européen des brevets

(11) **EP 0 664 815 B1**

## (12) EUROPEAN PATENT SPECIFICATION

(45) Date of publication and mention
of the grant of the patent:
**12.08.1998 Bulletin 1998/33**

(21) Application number: **93923929.9**

(22) Date of filing: **19.10.1993**

(51) Int Cl.[6]: **C08F 2/14**, C08F 2/34,
C08F 4/654, C08F 4/656,
C08F 210/02

(86) International application number:
**PCT/US93/09953**

(87) International publication number:
**WO 94/09040 (28.04.1994 Gazette 1994/10)**

(54) **PROCESS FOR PREPARING A CATALYST COMPOSITION**

VERFAHREN ZUR HERSTELLUNG EINER KATALYSATORZUSAMMENSETZUNG

PROCEDE DE PREPARATION D'UNE COMPOSTION DE CATALYSEUR

(84) Designated Contracting States:
**BE DE FR GB IT NL**

(30) Priority: **19.10.1992 US 962555**

(43) Date of publication of application:
**02.08.1995 Bulletin 1995/31**

(73) Proprietor: **MOBIL OIL CORPORATION**
**Fairfax, Virginia 22037-0001 (US)**

(72) Inventors:
• **MINK, Robert, I.**
**Warren, NJ 07059 (US)**
• **NOWLIN, Thomas, Edward**
**Cranbury, NJ 08512 (US)**

(74) Representative: **Hucker, Charlotte Jane et al**
**Gill Jennings & Every**
**Broadgate House,**
**7 Eldon Street**
**London EC2M 7LH (GB)**

(56) References cited:
**EP-A- 0 533 221**            **US-A- 4 301 029**
**US-A- 4 558 024**            **US-A- 4 558 025**
**US-A- 4 833 111**

• **CHEMICAL ABSTRACTS, vol. 93, no. 24,**
**December 1980 Columbus, Ohio, US; abstract**
**no. 221319h, 'Polymerization catalysts for**
**olefins' page 221321; column 2; & JP-A-55 094**
**908 (ICI)**

## Description

The present invention relates to a process for preparing a catalyst composition for copolymerization of ethylene with an alpha-olefin. More particularly the invention relates to a method for producing linear low density copolymers of ethylene, hereinafter referred to as "LLDPE".

LLDPE resins possess properties which distinguish them from other polyethylene polymers such as homopolymers of polyethylene. Certain of these properties are described in US-A-4076698.

When the LLDPE resins are fabricated into injection-molded products, it is imperative to assure that such products are not susceptible to warping or shrinking. As is known to those skilled in the art, the degree of warping or shrinking can be predicted from the molecular weight distribution of the resins. Resins having a relatively narrow molecular weight distribution produce injection-molded products exhibiting a minimum amount of warping or shrinkage. Conversely, resins having a relatively broader molecular weight distribution produce injection-molded products more likely to undergo warping or shrinkage.

One of the measures of the molecular weight distribution of the resin is melt flow ratio (MFR), which is the ratio of high melt flow index (HLMI or I21) to melt index (I2) for a given resin. The MFR value is believed to be an indication of the molecular weight distribution of the polymer, the higher the value, the broader the molecular weight distribution. Resins having relatively low MFR values, e.g., of about 20 to about 50, have relatively narrow molecular weight distributions. Additionally, LLDPE resins having such relatively low MFR values produce films of better strength properties than resins with high MFR values.

Flow index response is attributable to the catalyst system used in polymerization. The molecular weight of the ethylene copolymers may be controlled in a known manner, e.g., by using hydrogen. With the catalysts produced according to the present invention, molecular weight may be suitably controlled with hydrogen when the polymerization is carried out at relatively low temperatures, e.g., from 30 to 105°C. This control of molecular weight may be evidenced by a measurable positive change in melt index (I2) of the polymer produced.

Another important property of catalyst compositions for ethylene/alpha-olefin copolymerization is the ability thereof to effectively copolymerize ethylene with higher alpha-olefins, e.g., $C_3$-$C_{10}$ alpha-olefins, to produce resins having low densities. This property of the catalyst composition is referred to as "higher alpha-olefin incorporation property" and is usually measured by determining the amount of a higher alpha-olefin (e.g., 1-butene, 1-hexene or 1-octene) required in the polymerization process, e.g. fluid-bed reactor process, to produce a copolymer of ethylene and the higher alpha-olefin having a given density. The lesser is the amount of the higher alpha-olefin required to produce a resin of a given density, the higher are the production rates and, therefore, the lower is the cost of producing such a copolymer.

A high value of an alpha-olefin incorporation factor is especially important in the gas-phase fluid bed process, because relatively high concentrations of higher alpha-olefins in the fluid-bed reactor may cause poor fluidization caused, e.g., by resin stickiness. Therefore, production rates must be significantly reduced to avoid such problems. Consequently, catalyst compositions with relatively high alpha-olefin incorporation factor values avoid these problems and are more desirable.

Accordingly, it is important to provide a catalyst composition capable of producing ethylene copolymers having a relatively narrow molecular weight distribution (low MFR values) and low densities.

It is an object of the present invention to provide a process for preparing high activity catalyst for the polymerization of alpha-olefins yielding products of a relatively narrow molecular weight distribution.

It is an additional object of the present invention to provide a catalytic process for copolymerizing ethylene and alpha-olefins which yields LLDPE resins of a relatively narrow molecular weight distribution at high productivity.

According to the present invention there is provided a process for preparing a catalyst composition for copolymerization of ethylene with an alpha-olefin, to produce a resin product of narrow molecular weight distribution, said process comprising:

(i) contacting a solid, porous carrier having reactive OH groups in a non-polar liquid with an organomagnesium compound which has the empirical formula $R_mMgR'_n$, where R and R' are the same or different $C_2$-$C_{12}$ alkyl groups, and m and n are each 0, 1 or 2, providing that m + n = 2, to form a product of step (i) which contains said carrier and incorporated therein a source of magnesium, wherein said organomagnesium compound is soluble in said non-polar liquid;

(ii) introducing into the liquid containing said product of step (i) $SiCl_4$ to form an intermediate of step (ii);

(iii) contacting said intermediate of step (ii) with at least one transition metal compound in a non-polar liquid medium, the number of moles of said transition metal compound being in excess of the number of OH groups on said carrier prior to reaction with said organomagnesium compound in step (i), said transition metal compound being soluble in said non-polar liquid medium, and said magnesium-containing carrier being substantially insoluble in said non-polar liquid medium, whereby a reacted form of the transition metal becomes supported on said carrier; and

(iv) contacting said transition metal-containing intermediate with an ether $R_1OR_2$ wherein each of $R_1$ and $R_2$ is the

same or different and is an alkyl of 1 to 10 carbon atoms to form a precursor; and

(v) contacting the precursor with an activating amount of an organometallic compound.

In a particularly advantageous embodiment the organomagnesium compound is dibutyl magnesium; the ether is n-butyl ether; and the organometallic compound is triethylaluminum. Any of the preferred features of the invention described herinafter may be provided in combination with the broadest aspect of the invention, or in combination with this particularly advantageous embodiment.

The resulting activated catalyst composition has substantially higher activity and thus exhibits relatively high productivity in the copolymerization of ethylene and alpha-olefins. The catalyst also produces polymers having a narrow molecular weight distribution. The molecular weight distribution is narrower than that of polymers produced with catalytic compositions free of the $SiCl_4$ compound. The catalyst also produces polymers having increased flow index; that is, the flow index is greater than that of polymers produced with catalytic compositions omitting the $SiCl_4$ treatment step.

As used herein, the concept of supporting a material on a carrier is intended to connote the incorporation of material (e.g., magnesium compounds and/or titantium compounds) onto the carrier by physical or chemical means. Accordingly, supported material need not necessarily be chemically bound to the carrier.

Catalysts produced according to the present invention may be described in terms of the manner in which they can be made. More particularly, these catalysts can be described in terms of the manner in which a suitable carrier may be treated in order to form such catalysts.

Suitable carrier materials are solid and porous and include materials such as silica, alumina and combinations thereof. Such carrier materials may be amorphous or crystalline in form. These carriers may be in the form of particles having a particle size of from 0.1 micron (1 micron = 1 μm) to 250 microns, preferably from 10 to 200 microns, and most preferably from 10 to 80 microns. Preferably, the carrier is in the form of spherical particles, e.g., spray dried silica.

The carrier material is also porous. The internal porosity of these carriers may be larger than 0.2 $cm^3$/g, e.g., larger than 0.6 $cm^3$/g. The specific surface area of these carriers is at least 3 $m^2$/g, preferably at least 50 $m^2$/g, and more preferably from, e.g., 150 to 1500 $m^2$/g.

It is desirable to remove physically bound water from the carrier material prior to contacting this material with water-reactive magnesium compounds. This water removal may be accomplished by heating the carrier material to a temperature from 100°C to an upper limit of temperature represented by the temperature at which sintering occurs. A suitable range of temperatures may, thus, be from 100°C to 800°C, preferably from 150°C to 650°C.

Silanol groups (Si-OH) may be present when the carrier is contacted with water-reactive magnesium compounds. These Si-OH groups may be present at from 0.5 to 3 mmoles (milli moles) of OH groups per gram of carrier, but a preferred range is from 0.4 to 1.5 mmoles of OH groups per gram of carrier. Excess OH groups present in the carrier may be removed by heating the carrier for a sufficient time at a sufficient temperature to accomplish the desired removal. More particularly, for example, a relatively small number of OH groups may be removed by sufficient heating at from 150°C to 250°C, whereas a relatively large number of OH groups may be removed by sufficient heating at between, preferably between 550°C to 650°C. The duration of heating may be from 4 to 16 hours.

In a preferred embodiment, the carrier is silica which, prior to the use thereof in the first catalyst synthesis step, has been dehydrated by fluidizing it with nitrogen or air and heating at 600°C, or more, for about 16 hours to achieve a surface hydroxyl group concentration of about 0.7 mmol/g. The surface hydroxyl concentration of silica may be determined according to J.B. Peri and A.L. Hensley, Jr., J. Phys. Chem., 72 (8), 2926 (1968). The silica of the most preferred embodiment is a high surface area, amorphous silica (surface area = 300 $m^2$/g; pore volume of 1.65 $cm^3$/g), and it is a material marketed under the tradenames of Davison 952 or Davison 955 by the Davison Chemical Division of W. R. Grace and Company. When silica has been dehydrated by fluidizing with nitrogen or air and heated at about 600°C for about 16 hours, the surface hydroxyl concentration is about 0.72 mmols/g.

While heating is a preferred means of removing OH groups inherently present in a carrier such as silica, other removal means are also possible such as chemical means. For example, a desired proportion of OH groups may be reacted with a chemical agent such as a hydroxyl reactive aluminum compound, e.g., triethylaluminum.

Other examples of suitable carrier materials are described in US-A-4173547. Note particularly the passage extending from column 3, line 62 to column 5, line 44 of this patent. It is noted that internal porosity of carriers can be determined by a technique termed BET-technique, described by S. Brunauer, P. Emmett and E. Teller in Journal of the American Chemical Society, 60, pp. 209-319 (1938). Specific surface areas of carriers can also be measured in accordance with the above-mentioned BET-technique, with use of the standardized method as described in British Standards BS 4359, Volume 1, (1969).

The carrier material is slurried in a non-polar solvent and the resulting slurry is contacted with at least one organomagnesium compound. R and R' are preferably $C_4$ to $C_{10}$ alkyl groups, more preferably $C_4$ to $C_8$ alkyl groups. The organomagnesium compound is advantageously dibutylmagnesium.

The slurry of the carrier material in the solvent is normally prepared by introducing the carrier into the solvent, preferably while stirring, and heating the mixture to 25 to 100°C, preferably to 40 to 60°C. The slurry is then contacted with the aforementioned organomagnesium compound, while the heating is continued at the aforementioned temperature.

Suitable non-polar solvents are materials in which all of the reactants used herein, e.g., the organomagnesium compound, the transition metal compound SiCl4 and the ether are at least partially soluble and which are liquid at reaction temperatures. Preferred non-polar solvents are alkanes, such as isopentane, hexane, n-heptane, octane, nonane, and decane, although a variety of other materials including cycloalkanes, such as cyclohexane, aromatics, such as benzene and ethylbenzene, may also be employed. The most preferred non-polar solvents are isopentane, hexane, heptane. Prior to use, the non-polar solvent should be purified, such as by percolation through silica gel and/ or molecular sieves, to remove traces of water, oxygen, polar compounds, and other materials capable of adversely affecting catalyst activity.

In the most preferred embodiment of the synthesis of this catalyst it is important to add only such an amount of the organomagnesium compound that will be deposited-physically or chemically - onto the support since any excess of the organomagnesium compound in the solution may react with other synthesis chemicals and precipitate outside of the support. The carrier drying temperature affects the number of sites on the carrier available for the organomagnesium compound - the higher the drying temperature the lower the number of sites. Thus, the exact molar ratio of the organomagnesium compound to the hydroxyl groups will vary and must be determined on a case-by-case basis to assure that only so much of the organomagnesium compound is added to the solution as will be deposited onto the support without leaving any excess of the organomagnesium compound in the solution. Thus, the molar ratios given below are intended only as an approximate guideline and the exact amount of the organomagnesium compound in this embodiment must be controlled by the functional limitation discussed above, i.e., it is highly desirably that it is not greater than that which can be deposited onto the support. If greater than that amount is added to the solvent, the excess may react with the reagents added subsequently, thereby forming a precipitate outside of the support which is detrimental in the synthesis of the catalyst and,therefore, should preferably be avoided. The amount of the organomagnesium compound which is not greater than that deposited onto the support can be determined in any conventional manner, e.g., by adding the organomagnesium compound to the slurry of the carrier in the solvent, while stirring the slurry, until the organomagnesium compound is detected in the solvent.

For example, for the silica carrier heated at about 600°C, the amount of the organomagnesium compound added to the slurry is such that the molar ratio of Mg to the hydroxyl groups (OH) in the solid carrier is 1:1 to 4:1, preferably 1:1 to 2.5:1 and also preferably 1.1:1 to 2.8:1, more preferably 1.1:1 to 2.5:1, even more preferably 1.1:1 to 1.8:1, particularly 1.2:1 to 1.8:1 and most preferably about 1.4:1.

It is also possible to add such an amount of the organomagesium compound which is in excess of that which will be deposited onto the support, and then remove, e.g., by filtration and washing, the organomagnesium compound not deposited onto the carrier. However, this alternative is less desirable than the most preferred embodiment described above.

Preferably, the carrier should be impregnated such that the pores of same contain the reactive solid magnesium compound. A preferred means of accomplishing this result is by incorporating a porous carrier in a liquid medium containing dissolved organomagnesium compound and allowing magnesium to become impregnated into the pores of the carrier by a reaction of the organomagnesium compound with the carrier. Evaporation of the non-polar solvent which is a non-Lewis base liquid from this step would obtain a carrier, containing magnesium, in the form of a dry, free-flowing powder.

The amount of magnesium compound which is impregnated onto the carrier should be sufficient to react with the [$SiCl_4$] compound and then the transition metal compound in order to incorporate a catalytically effective amount of transition metal on the carrier in the manner set forth herein below. When a liquid containing an organomagnesium compound is contacted with a carrier the amount of magnesium in this liquid in terms of mmoles may be essentially the same as that stated above with respect to that which is impregnated onto the carrier.

An essential component in the production of the catalyst compound of the invention is $SiCl_4$. The compound is added in an amount effective to decrease the molecular weight distribution of the copolymer or in amounts effective to increase the catalyst activity. Generally the amount of this compound is such that the molar ratio of $SiCl_4$ to Mg ranges from 0.40 to 1.40.

The slurry of the carrier material containing the organomagnesium species in the solvent is maintained at temperatures of 40 to 60°C, for introduction of $SiCl_4$. The $SiCl_4$ compound is introduced after organomagnesium incorporation and preferably before transition metal incorporation into the catalyst. The amount of the $SiCl_4$ compound added to the slurry is such that the molar ratio of $SiCl_4$ to Mg on the solid carrier is 0.40 to 1.40.

The slurry is then contacted with at least one transition metal compound soluble in the non-polar solvent. This synthesis step is conducted at 25 to 65°C, preferably at 30 to 60°C, and most preferably at 45 to 55°C. In a preferred embodiment, the amount of the transition metal compound added is not greater than that which can be deposited onto the carrier. The exact molar ratio of Mg to the transition metal and of the transition metal to the hydroxyl groups of the carrier will therefore vary (depending, e.g., on the carrier drying temperature) and must be determined on a case-by-case basis. For example, for the silica carrier heated at 200 to 850°C, the amount of the transition metal compound is such that the molar ratio of the transition metal, derived from the transition metal compound, to the hydroxyl groups of the carrier is 1 to 2.0, preferably 1.3 to 2.0. The amount of the transition metal compound is also such that the molar ratio of Mg to the transition metal is 0.5 to 3, preferably 1 to 2. These molar ratios appear to produce a catalyst composition which produces resins having relatively low MFR values of 20 to 45. As is known to those skilled in the art, such resins can be utilized to produce high strength films or injection molding products which are resistant to warping and shrinking.

Suitable transition metal compounds used herein are compounds of metals of Groups IVA, VA, VIA or VIII of the Periodic Chart of the Elements, as published by the Fisher Scientific Company, Catalog No. 5-702-10, 1978 providing that such compounds are soluble in the non-polar solvents. Non-limiting examples of such compounds are titanium halides, e.g., titanium tetrachloride, titanium alkoxides (e.g., where the alkoxide moiety contains an alkyl radical of 1 to 6 carbon atoms or mixtures thereof, vanadium halides (vanadium tetrachloride) vanadium oxytrichloride, and vanadium alkoxides. The preferred transition metal compounds are titanium compounds, preferably tetravalent titanium compounds. The most preferred titanium compound is titanium tetrachloride. Mixtures of such transition metal compounds may also be used and generally no restrictions are imposed on the transition metal compounds which may be included. Any transition metal compound that may be used alone may also be used in conjunction with other transition metal compounds.

The reaction of the transition metal compound, such as the tetravalent titanium compound, in the liquid medium conveniently takes place by slurrying the solid carrier containing the reactive magnesium species in a solution of the tetravalent titanium compound and heating the reaction medium to a suitable reaction temperature, e.g., to the reflux temperature of the solvent at standard atmospheric pressure. Thus, the reaction may take place under reflux conditions. Preferred solvents for the tetravalent titanium compound are hexane or isopentane or heptane.

The various reaction parameters are subject to a wide variety of possibilities, suitable selection of such parameters being well within the skill of those having ordinary skill in the art. However, for example, the volume of tetravalent titanium solution to treated carrier initially slurried in the solution may be from 0.1 to 10 ml per gram of such carrier. The concentration of the tetravalent titanium solution may be, for example, from 0.1 to 9 Molar. The amount of tetravalent titanium in solution may be, e.g., in excess of the molar amount of organomagnesium earlier used to treat the carrier. More particularly, for example, the molar ratio of tetravalent titanium to organomagnesium may be from 0.3 to 2, more particularly from 0.7 to 1.4. Unreacted titanium compounds may be removed by suitable separation techniques such as decantation, filtration and washing.

The carrier supported transition metal intermediate is treated with an ether $R_1OR_2$ wherein each of $R_1$ amd $R_2$ are the same or different and are alkyl of 1 to 10 carbon atoms, such as methyl, ethyl, propyl, iso-propyl, butyl, iso-butyl, t-butyl, pentyl, iso-pentyl, 2,2-dimethyl-propyl, etc: n-butyl ether is particulary preferred.

The supported catalyst precursor formed from components described above is then activated with a suitable activator in the form of an organometallic compound. Preferably, the activator is a trialkylaluminum compound. Most preferably, the activator is triethylaluminum.

The catalyst precursor may be activated in situ by adding the activator and catalyst precursor separately to the polymerization medium. It is also possible to combine the catalyst precursor and activator before introduction into the polymerization medium, e.g., for up to 2 hours at a temperature from -40 to 80°C.

A suitable activating amount of the activator may be used. The number of moles of activator per gram atom of titanium in the catalyst may be, e.g., from 1 to 100 and is preferably greater than 5.

The molar ratio of the organometallic compound to transistor metal ranges preferably from 1 to 500.

Alpha-olefins may be polymerized with the catalysts prepared according to present invention by any suitable process. Such processes include polymerizations carried out in suspension, in solution or in the gas phase. Gas phase polymerizations are preferred such as those taking place in stirred bed reactors and, especially, fluidized bed reactors.

The molecular weight of the polymer may be controlled in a known manner, preferably by using hydrogen. With the catalysts produced according to the present invention, molecular weight may be suitably controlled with hydrogen when the polymerization is carried out at relatively low temperatures, e.g., from 30 to 105°C.

The catalysts prepared according to the present invention are particularly useful for the production of LLDPE resins. Such LLDPE resins may have a density of 0.94 g/cc (1 g/cc = 1 g/cm$^3$) or less, preferably 0.930 or less or even 0.925 g/cc or less. Using the catalyst prepared in accordance with the present invention, it is possible to achieve densities of less than 0.915 g/cc and even 0.900 g/cc.

Advantageous properties of LLDPE resins are described in US-A-4076698. These LLDPE resins may be copolymers of ethylene with one or more $C_3$-$C_{10}$ alpha-olefins. Thus, copolymers having two monomeric units are possible as well as terpolymers having three monomeric units. Particular examples of such polymers include ethylene/1-butene copolymers, ethylene/1-hexene copolymers, ethylene/4-methyl-1-pentene copolymers, ethylene/1-butene/1-hexene terpolymers, ethylene/propylene/1-hexene terpolymers and ethylene/propylene/1-butene terpolymers. The relatively low MFR values of the copolymers prepared with the catalysts of this invention indicate that they are suitable for the preparation of various film products since such films are likely to have excellent strength properties.

LLDPE resins produced in accordance with the present invention preferably contain at least 80 percent by weight of ethylene units. Most preferably, the LLDPE resins of the invention contain at least 2 weight percent, for example from 2 to 20 weight percent of an alpha-olefin.

A particularly desirable method for producing LLDPE resins, according to the present invention, is in a fluid bed reactor. Such a reactor and means for operating same is described in US-A-4011382 and in US-A-4302566. The activity of the catalyst produced in accordance with the present invention is sufficient to produce an LLDPE resin such as an ethylene/1-hexene copolymer, e.g., having a density of less than 0.940 g/cc, in such a fluid bed reactor.

In order to achieve the desired density ranges in the copolymers it is necessary to copolymerize enough of the alpha-olefin comonomers with ethylene to achieve a level of 1 to 5 mol percent of the $C_3$ to $C_8$ comonomer in the copolymer. The amount of the comonomer needed to achieve this result will depend on the particular comonomer(s) employed.

In accordance with the invention, it has unexpectedly been found that using a gas phase catalytic polymerization reaction, 1-hexene can be incorporated into an ethylene-based copolymer chain with high efficiency. In other words, a relatively small concentration of 1-hexene monomer in the gas phase reactor can lead to a relatively large incorporation of 1-hexene into the copolymer. Thus, 1-hexene can be incorporated into an ethylene-based copolymer chain in a gas phase reactor in amounts up to 15 percent by weight, preferably 4 to 12 percent by weight, to produce an LLDPE resin having a density of less than 0.940 g/cc.

It is essential to operate the fluid bed reactor at a temperature below the sintering temperature of the polymer particles. For the production of ethylene copolymers in the process of the present invention an operating temperature of 30° to 115°C is preferred, and a temperature of 75° to 95°C is most preferred. Temperatures of 75° to 90°C are used to prepare products having a density of about 0.91 to 0.92, and temperatures of 80° to 100°C are used to prepare products having a density of about 0.92 to 0.94, and temperatures of 90° to 115°C are used to prepare products having a density of about 0.94 to 0.96.

The fluid bed reactor is operated at pressures of up to 1000 psi (6.9 MPa), and is preferably operated at a pressure of from about 150 to 350 psi (1 MPa to 2.4 MPa).

Films having especially desirable properties may be formed with the above-mentioned ethylene/1-hexene copolymers prepared with the catalysts of the present invention by a variety of techniques. For example, desirable blown films as well as slot cast films may be formed.

Blown films formed from ethylene/1-hexene copolymers having a density from 0.916 to 0.928 g/cc may have especially desirable properties for bag manufacture. For example, such blown films may be fabricated into trash bags. A particular example of a blown film formed from an ethylene/1-hexene copolymer having a density of 0.927 and an I2 of 1 (ASTM D-1238, condition E), which is, in turn, formed in a gas phase, fluid bed reactor with a catalyst according to the present invention, is a blown film having an improved dart impact strength, enhanced Elmendorf tear strength in the machine direction (MD) and higher tensile strength.

Slot cast films formed from LLDPE ethylene/1-hexene copolymers having a density of from 0.916 to 0.92 may have especially desirable properties as pallet stretch wrap. A particular example of a slot cast film formed from an ethylene/1-hexene copolymer having a density of about 0.92 and an I2 of 1.7 (ASTM D-1238, condition E), which is, in turn, formed in a gas phase, fluid bed reactor with a catalyst according to the present invention, is a slot cast film having a thickness of 1 mil, an improved MD tensile strength and a very high Elmendorf tear strength in the transverse direction of the film.

The following Examples illustrate reactants and parameters which may be used in accordance with aspects of the present invention.

## EXAMPLES

### EXAMPLES A-D - Catalyst Precursor Preparation

All manipulations were conducted under a nitrogen atmosphere by using standard Schlenk techniques. A typical example of the preparation of a catalyst precursor is illustrated. Into a 200 ml Schlenk flask was placed 7.0 grams of Davison grade 955 silica, which was previously dried under a nitrogen purge at 600°C for about 16 hours. Hexane (90 ml) was added to the silica. Dibutylmagnesium (7.0 mmol) was added to the stirred slurry at 50-55°C and stirring was continued for one hour. $SiCl_4$ (9.23 mmol) was added to the slurry (50-55°C) and stirring was continued for one hour. TiCl4 (7.0 mmol) was added to the reaction medium (50-55°C) and stirring was continued for an additional hour. N-butyl ether (7.0 mmol) was then added to the slurry and the contents were stirred for one hour at 50-55°C. Hexane was then removed by distillation with a nitrogen purge at 50-55°C. The yield was 9.3 grams.

EXAMPLE E - Polymerization

Ethylene/1-hexene copolymers were prepared with the catalyst precursors of Examples A-D and a typical example is shown below.

Polymerization

A 1.6 liter stainless steel autoclave under a slow nitrogen purge at 50°C was filled with 750 ml dry hexane and 30 ml of dry 1-hexene, and 3.0 mmol of triethylaluminum (TEAL) was added under a slow nitrogen purge. The reactor was closed, the stirring was increased to 900 rpm, and the internal temperature was increased to 85°C. The internal pressure was raised 12 psi (83 KPa) with hydrogen. Ethylene was introduced to maintain the pressure at about 120 psi (830 KPa). The internal temperature was decreased to 80°C, 40 mg of catalyst precursor was introduced into the reactor with ethylene over-pressure, and the internal temperature was increased and held at 85°C. The polymerization was continued for 60 minutes, and then the ethylene supply was stopped and the reactor was allowed to cool to room temperature. The polyethylene was collected and air dried.

Catalyst productivities, polymer flow indexes and MFR values are given in TABLE A below. Catalyst productivities are given in units of gram of polymer/gram of catalyst-h-100 psi (690 kPa) ethylene.

Catalyst precursors were prepared according to the two schemes below.

$$\text{Silica} \quad \xrightarrow{\text{Dibutyl-magnesium}} \quad \xrightarrow{\text{SiCl4}} \quad \xrightarrow{\text{TiCl4}}$$

$$\text{Silica} \quad \xrightarrow{\text{Dibutyl-magnesium}} \quad \xrightarrow{\text{SiCl4}} \quad \xrightarrow{\text{TiCl4}} \quad \xrightarrow{\text{n-butyl ether}}$$

TABLE A

| Example | SiCl$_4$ employed | N-butyl ether employed | Productivity | I2 | MFR |
|---------|-------------------|------------------------|--------------|-----|------|
| A | No (control) | No | 590 | 2.3 | 70.1 |
| B | Yes | No | 1500 | 4.0 | 43.3 |
| C | No (control) | Yes | 2780 | 6.9 | 31.3 |
| D | Yes | Yes | 5200 | 7.2 | 30.4 |

The data show that SiCl$_4$-based catalysts are much more active compared to the control (silica-free) catalysts. Greater than 80% increases in catalyst productivity were obtained when SiCl$_4$ was included in the catalyst preparative scheme. Using SiCl$_4$ and n-butyl ether produces the most active catalyst. A comparison of Examples A and B shows that using SiCl$_4$ in the preparation scheme produces a resin which exhibits a much narrower molecular weight distribution.

**Claims**

1. A process for preparing a catalyst composition for copolymerization of ethylene with an alpha-olefin, to produce a resin product of narrow molecular weight distribution, said process comprising:

(i) contacting a solid, porous carrier having reactive OH groups in a non-polar liquid with an organomagnesium compound which has the empirical formula $R_mMgR'_n$, where R and R' are the same or different $C_2$-$C_{12}$ alkyl groups, and m and n are each 0, 1 or 2, providing that m + n = 2, to form a product of step (i) which contains said carrier and incorporated therein a source of magnesium, wherein said organomagnesium compound is soluble in said non-polar liquid;

(ii) introducing into the liquid containing said product of step (i) SiCl$_4$ to form an intermediate of step (ii);

(iii) contacting said intermediate of step (ii) with at least one transition metal compound in a non-polar liquid medium, the number of moles of said transition metal compound being in excess of the number of OH groups on said carrier prior to reaction with said organomagnesium compound in step (i), said transition metal compound being soluble in said non-polar liquid medium, and said magnesium-containing carrier being substantially insoluble in said non-polar liquid medium, whereby a reacted form of the transition metal becomes supported on said carrier; and

(iv) contacting said transition metal-containing intermediate with an ether $R_1OR_2$ wherein each of $R_1$ and $R_2$ is the same or different and is an alkyl of 1 to 10 carbon atoms to form a precursor; and

(v) contacting the precursor with an activating amount of an organometallic compound.

2. A process according to claim 1, wherein the organomagnesium compound is dibutylmagnesium,

3. A process according to claim 1 or claim 2, wherein the ether is n-butyl ether.

4. A process according to any of claims 1 to 3, wherein the organometallic compound is triethylaluminum.

5. A process according to any preceding claim, wherein the carrier is silica and wherein, in step (i), the ratio of the number of moles of said organomagnesium compound to the number of moles of said OH groups on said silica is from 1.0 to 2.5, and wherein in step (ii) the molar ratio of $SiCl_4$ to Mg is 0.40 to 1.40.

6. A process according to claim 5, wherein, in step (i), the ratio of the number of moles of said organomagnesium to the number of moles of OH groups on said silica is from 1.1 to 2.5.

7. A process according to claim 6, wherein, in step (i), the ratio of the number of moles of said organomagnesium compound to the number of moles of OH groups on said silica is from 1.1 to 1.8.

8. A process according to any preceding claim, wherein the molar ratio of the organometallic compound to transition metal ranges from 1 to 500.

9. A process according to any preceding claim, wherein the transition metal is titanium.

10. A process according to claim 9, wherein the transition metal is provided as tetravalent titanium compound.

11. A process according to claim 10, wherein the transition metal is titanium tetrachloride.

12. A catalyst obtainable by a process according to any preceding claim.

13. A process for copolymerizing ethylene with an alpha-olefin to produce a LLDPE resin comprising contacting ethylene, under ethylene polymerization conditions, with a catalyst according to claim 12.

14. A process for copolyrnerizing ethylene with an alpha olefin to produce LLDPE resins comprising contacting ethylene and triethylaluminum, under ethylene polymerization conditions, with a catalyst according to claim 12.

## Patentansprüche

1. Verfahren zur Herstellung einer Katalysatorzusammensetzung für die Copolymerisation von Ethylen mit einem α-Olefin, wodurch ein Harzprodukt mit einer begrenzten Molekulargewichtsverteilung hergestellt wird, wobei das Verfahren umfaßt:

(i) Kontakt eines festen porösen Trägers mit reaktiven OH-Gruppen in einer nichtpolaren Flüssigkeit mit einer Organomagnesiumverbindung, die die empirische Formel $R_mMgR'_n$ hat, worin R und R' gleiche oder verschiedene $C_2$-$C_{12}$-Alkylgruppen sind und m und n jeweils 0, 1 oder 2 sind, vorausgesetzt, daß m + n = 2, wodurch ein Produkt des Schrittes (i) erzeugt wird, das den Träger und eine darin eingeführte Magnesiumquelle enthält, wobei die Organomagnesiumverbindung in der nichtpolaren Flüssigkeit löslich ist,

(ii) Einführen von $SiCl_4$ in die das Produkt vom Schritt (i) enthaltende Flüssigkeit, wodurch ein Zwischenprodukt des Schrittes (ii) erzeugt wird,

(iii) Kontakt des Zwischenproduktes vom Schritt (ii) mit mindestens einer Übergangsmetallverbindung in einem nichtpolaren flüssigen Medium, wobei die Anzahl der Mole der Übergangsmetallverbindung größer als die Anzahl der OH-Gruppen auf dem Träger vor der Reaktion mit der Organomagensiumverbindung im Schritt (i) ist, wobei die Übergangsmetallverbindung in dem nichtpolaren flüssigen Medium löslich ist und der magnsiumhaltige Träger in dem nichtpolaren flüssigen Medium im wesentlichen unlöslich ist, wodurch der Träger eine reagierte Form des Übergangsmetalls trägt, und

(iv) Kontakt des ein Übergangsmetall enthaltenden Zwischenproduktes mit einem Ether $R_1OR_2$, worin $R_1$ und $R_2$ jeweils gleich oder verschieden und ein Alkyl mit 1 bis 10 Kohlenstoffatomen sind, wodurch eine Vorstufe entsteht, und

(v) Kontakt der Vorstufe mit einer aktivierenden Menge einer Organometallverbindung.

2. Verfahren nach Anspruch 1, wobei die Organomagnesiumverbindung Dibutylmagnesium ist.

3. Verfahren nach Anspruch 1 oder 2, wobei der Ether n-Butylether ist.

4. Verfahren nach einem der Ansprüche 1 bis 3, wobei die Organometallverbindung Triethylaluminium ist.

5. Verfahren nach einem der vorstehenden Ansprüche, wobei der Träger Siliciumdioxid ist und wobei im Schritt (i) das Verhältnis der Anzahl der Mole der Organomagnesiumverbindung zu der Anzahl der Mole der OH-Gruppen auf dem Siliciumdioxid 1,0 bis 2,5 beträgt, und wobei das Molverhältnis von $SiCl_4$ zu Mg im Schritt (ii) 0,40 bis 1,40 beträgt.

6. Verfahren nach Anspruch 5, wobei im Schritt (i) das Verhältnis der Anzahl der Mole von Organomagnesium zur Anzahl der Mole der OH-Gruppen auf dem Siliciumdioxid 1,1 bis 2,5 beträgt.

7. Verfahren nach Anspruch 6, wobei im Schritt (i) das Verhältnis der Anzahl der Mole der Organomagnesiumverbindung zur Anzahl der Mole der OH-Gruppen auf dem Siliciumdioxid 1,1 bis 1,8 beträgt.

8. Verfahren nach einem der vorstehenden Ansprüche, wobei das Molverhältnis der Organometallverbindung zum Übergangsmetall im Bereich von 1 bis 500 liegt.

9. Verfahren nach einem der vorstehenden Ansprüche, wobei das Übergangsmetall Titan ist.

10. Verfahren nach Anspruch 9, wobei das Übergangsmetall als vierwertige Titanverbindung bereitgestellt wird.

11. Verfahren nach Anspruch 10, wobei das Übergangsmetall Titantetrachlorid ist.

12. Katalysator, der nach einem Verfahren nach einem der vorstehenden Ansprüche erhalten werden kann.

13. Verfahren zur Copolymerisation von Ethylen mit einem α-Olefin, wodurch ein LLDPE-Harz hergestellt wird, das den Kontakt von Ethylen bei Bedingungen für die Polymerisation von Ethylen mit einem Katalysator umfaßt, der nach Anspruch 12 hergestellt wurde.

14. Verfahren zur Copolymerisation von Ethylen mit einem α-Olefin, um LLDPE-Harze herzustellen, das den Kontakt von Ethylen und Triethylaluminium bei Bedingungen für die Polymerisation von Ethylen mit einem Katalysator umfaßt, der nach Anspruch 12 hergestellt wurde.

**Revendications**

1. Un procédé de préparation d'une composition de catalyseur pour la copolymérisation de l'éthylène avec une alpha-oléfine pour donner comme produit une résine de distribution de masse moléculaire étroite, ledit procédé comprenant:

(i) la mise en contact d'un support poreux, solide, comportant des groupes OH réactifs dans un liquide non polaire avec un dérivé organomagnésien qui répond à la formule empirique $R_mMgR'_n$, où R et R', identiques ou différents, sont des groupes alkyle en $C_2$-$C_{12}$ et m et n sont chacun égaux à 0, 1 ou 2, pour autant que m + n = 2, pour former un produit de l'étape (i) qui contient ledit support et, incorporée en son sein, une source de magnésium, et dans lequel ledit dérivé organomagnésien est soluble dans ledit liquide non polaire;

(ii) l'introduction dans le liquide contenant ledit produit de l'étape (i) de $SiCl_4$ pour former un intermédiaire de l'étape (ii);

(iii) mise en contact dudit intermédiaire de l'étape (ii) avec au moins un dérivé de métal de transition dans un milieu liquide non polaire, le nombre de moles dudit dérivé de métal de transition étant en excès par rapport au nombre de groupes OH sur ledit support avant la réaction avec ledit dérivé organomagnésien dans l'étape (i), ledit dérivé de métal de transition étant soluble dans ledit milieu liquide non polaire et ledit support contenant du magnésium étant pratiquement insoluble dans ledit milieu liquide non polaire, de façon que la forme ayant réagi du métal de transition devienne supportée sur ledit support; et

(iv) mise en contact dudit intermédiaire contenant le métal de transition avec un éther $R_1OR_2$, dans lequel chacun des $R_1$ et $R_2$ est identique ou différent et est un alkyle comportant 1 à 10 atomes de carbone pour former un précurseur; et

(v) mise en contact du précurseur avec une quantité activante d'un dérivé organométallique.

2. Un procédé selon la revendication 1, dans lequel le dérivé organomagnésien est le dibutylmagnésium.

3. Un procédé selon l'une quelconque des revendications 1 et 2, dans lequel l'éther est le n-butyléther.

4. Un procédé selon l'une quelconque des revendications 1 à 3, dans lequel le dérivé organométallique est le triéthylaluminium.

5. Un procédé selon l'une quelconque des revendications précédentes, dans lequel le support est la silice et dans lequel, dans l'étape (i), le rapport du nombre de moles dudit dérivé organomagnésien au nombre de moles desdits groupes OH sur ladite silice est de 1,0 à 2,5, et dans lequel, dans l'étape (ii), le rapport molaire du $SiCl_4$ au Mg est de 0,40 à 1,40.

6. Un procédé selon la revendication 5, dans lequel, dans l'étape (i), le rapport du nombre de moles dudit dérivé organomagnésien au nombre de moles des groupes OH sur ladite silice est de 1,1 à 2,5.

7. Un procédé selon la revendication 6, dans lequel, dans l'étape (i), le rapport du nombre de moles dudit dérivé organomagnésien au nombre de moles de groupes OH sur ladite silice est de 1,1 à 1,8.

8. Un procédé selon l'une quelconque des revendications précédentes, dans lequel le rapport molaire du dérivé organométallique au métal de transition est compris entre 1 et 500.

9. Un procédé selon l'une quelconque des revendications précédentes, dans lequel le métal de transition est le titane.

10. Un procédé selon la revendication 9, dans lequel le métal de transition est amené sous forme de dérivé de titane tétravalent.

11. Un procédé selon la revendication 10, dans lequel le métal de transition est le tétrachlorure de titane.

12. Un catalyseur susceptible d'être obtenu par un procédé selon l'une quelconque des revendications précédentes.

13. Un procédé de copolymérisation de l'éthylène avec une alpha-oléfine pour obtenir une résine LLDPE comprenant la mise en contact de l'éthylène, dans les conditions de polymérisation de l'éthylène, avec un catalyseur obtenu selon la revendication 12.

14. Un procédé de copolymérisation de l'éthylène avec une alpha-oléfine pour obtenir des résines LLDPE comprenant la mise en contact de l'éthylène et du triéthylaluminium dans les conditions de polymérisation de l'éthylène, avec un catalyseur obtenu selon la revendication 12.